# EUROPEAN PATENT SPECIFICATION

(11) **EP 1 569 815 B1**
(45) Date of publication and mention of the grant of the patent: **19.11.2014**
(21) Application number: 03785801.6
(22) Date of filing: 12.12.2003
(51) Int. Cl.: B60L 7/26, B60T 13/58

(54) **BRAKING SYSTEM AND BRAKING CONTROL METHOD**
BREMSSYSTEM UND BREMSSTEUERVERFAHREN
SYSTEME DE FREINAGE ET PROCEDE DE COMMANDE DE FREINAGE

(30) Priority: 13.12.2002 GB 0229097
(43) Date of publication of application: 07.09.2005
(73) Proprietor: Bombardier Transportation GmbH, 10785 Berlin (DE)
(72) Inventor: PÄTZOLD, Michael, 16727 Botzow (DE)
(74) Representative: Broydé, Marc
(86) International application number: PCT/EP2003/014113
(87) International publication number: WO 2004/054840

(56) References cited:
- EP-A- 1 157 877
- US-A- 4 659 149
- US-A- 4 692 867
- US-A- 5 713 639

## Description

The present invention relates to a braking system and in particular to such a system for implementation on a multi-axle vehicle such as a train or other rail vehicle. The invention also relates to a method for controlling a braking system.

It is customary in many transport systems to provide a number of different braking systems whereby a vehicle may be brought to rest safely and securely despite failure or ineffectiveness of one of the systems. The family car has long been provided with a mechanical handbrake, which is independent of the servo-assisted hydraulic system. Lorries and buses generally have more sophisticated alternatives in the form of exhaust brakes which are used to provide a portion of the braking requirement by slowing the driven wheels using the engine. Rail vehicles also use a combination of different braking systems which may include:
∘ electrodynamic braking by the motor
∘ eddy current braking e.g. via the track
∘ magnetic braking by magnets suspended above the rails
∘ pneumatic or hydraulic friction braking of wheels or axles
∘ aerodynamic braking (air drag used on some high speed trains)

These alternative braking systems act in different ways and between different parts of the vehicle and its surroundings. They thus ensure a certain level of redundancy in the system whereby one system may compensate for failure of another system.

In current suburban and light rail systems it is customary to provide redundant braking in the form of an electrodynamic main brake system and a pneumatic auxiliary brake system. Normal braking is conducted via the main brake system which operates regeneratively through the motors to brake the driven axles. Additional brake force can be provided by the pneumatic brakes which may be provided for all axles or only on the undriven axles. In the case of total failure of the main brake system, the auxiliary brake system should be capable of completely providing the required braking force and bringing the train to a stop. In the case of partial or temporary failure of the main brake system, the auxiliary brake should provide the necessary compensatory braking force to maintain the requested speed reduction. In general, because of the nature of regenerative braking, as the vehicle speed decreases, the effect of the regenerative brake also reduces and must be supplemented by the pneumatic braking system. This use of the two systems is known as blending. Examples of prior art arrangements for blending between electrodynamic and friction braking systems are known from US4659149 and US4671577, US 5713639 as well as US 4692867.

In prior art systems, trains are usually provided as units, each unit being effectively self contained and capable of operating independently. Flexibility of operation may be achieved by adding a number of units together or by adding further carriages to a given unit. Since each unit is self contained, the control of the braking system is also embodied within the unit whereby local blending of the main brake system and the auxiliary brake system takes place within the unit.

Typical reasons for operation of the auxiliary brake may include the following:
▪ Operation of slip prevention control in one or more of the main brake control systems
▪ Overloading of the rail vehicle
▪ Reduction in braking force of the main brake system due to impairment or breakdown of sub components
▪ Complete failure of one or more units of the main brake system
▪ Absence of electrical supply whereby regenerative braking cannot occur.

Depending on the reason for operation of the auxiliary brake system, different scenarios may be considered for control thereof. It is clear for instance, that if the main brake is ineffective on one axle for reasons of wheel slip, operation of the auxiliary pneumatic brake on the same axle will not serve to reduce the slip. It will also be appreciated that since slip may be a consequence of a local condition of the track, activation of the auxiliary brake on an adjacent axle or bogie may also lead to slip of those wheels.

It is a particular problem with pneumatic brakes that their braking capacity is limited by their ability to dissipate heat. Such brake systems are not intended for extended use. In the case of complete failure of the main brake system within a given unit, the auxiliary brake system within the same unit may quickly reach its limits of operation. Since the operation of the train is limited by that of the weakest unit, this may require the whole train to reduce its operating speed.

It is therefore desirable that the auxiliary braking system be configured to allow appropriate sharing or distribution of the compensatory braking force over a substantial part of the whole train rather than over a limited number of axles within a single unit. In this way, not only is the share of the compensatory braking force for each auxiliary brake element reduced but also the braking capacity is distanced from the ineffective main brake element, thus reducing the chance of these units being affected by similar track conditions. Furthermore, by such distribution, the reduction of the braking force applied per wheel decreases the overall probability of any one wheel reaching its limit of adhesion to the rail.

On modem rail systems, particularly for commuter services, it is extremely important for the train operator to be able to simply and quickly reconfigure a train by adding extra carriages. It has not been possible for the train operator to reconfigure the braking system of the new combination of units to achieve this optimised distribution of braking across the entire reconfigured train.

According to the present invention this is achieved by the provision of a brake system for a multi-axle rail vehicle comprising a plurality of brake elements for applying a required braking force to the vehicle in response to a brake command and a controller which monitors operation of the brake elements and on detection of a reduction of effectiveness of one brake element, distributes the associated loss of braking force between the remaining brake elements.

Advantageously, the present invention also provides for a rail vehicle comprising such a brake system, in particular a rail vehicle comprising a plurality of individually operable units wherein the controller comprises a unit controller for each unit.

In this context, references to an individually operable unit are intended to refer to the smallest individual unit which is capable of operating as a self contained vehicle. This will usually be a vehicle comprising a motor or other propulsive or tractive device and will also include all the necessary control systems for driving, braking etc. At its simplest however, it is also considered to fall within the scope of the invention that the unit may comprise a unit controller and brake elements without the inclusion of a motor. The unit controller thus provides the means to interact with the other units, during set up of the configuration of the train and thus ensures simple configuration of multiple units according to the wishes of the train operator, while conserving optimum brake distribution. During set up or periodically during operation, each unit controller may receive configuration information concerning the number of units comprised in the rail vehicle and the configuration information may include information concerning the number and type of brake elements present in the rail vehicle.

The operation of such a brake system in a vehicle comprising a plurality of individually operable units, may ensure that the brake force is adequately distributed between the brake elements of the different units. Furthermore, by providing each unit with its own unit controller, each unit controller may operate in parallel to reach the same ideal distribution. A cross-check function may be provided to ensure that all unit controllers arrive at the same result with a fault reporting procedure being implemented in the case of disparity. Alternatively, only certain unit controllers may operate, whereby others are deactivated once the configuration of the train is determined.

According to further advantageous embodiments of the invention, the rail vehicle may comprise brake elements of a first brake type and a second brake type and the controller, on detection of a reduction of effectiveness of a brake element of a first brake type, can distribute the associated loss of braking force between the brake elements of the second brake type. In certain circumstances, the braking force may initially be applied only by the brake elements of the first brake type in response to the brake command. The controller may distributes a loss of braking force between all the brake elements of the second brake type or may distributes the associated loss of braking force only between axles having effective brake elements only of the second brake type. This arrangement is particularly advantageous in cases where an axle has brake elements of both the first and second type but where the brake element of the first type or ineffective or partially ineffective.

The present invention also provides a method of achieving a desired braking force in a rail vehicle comprising a plurality of individual units each unit including brake elements of a first and/or second type, the method comprising: interrogating the individual units to determine the number of individual units comprised in the rail vehicle and the number and type of brake elements; determining the current operating conditions of the rail vehicle; evaluating whether the desired braking force can be achieved using only the brake elements of a first type and in the event that not all the desired braking force can be provided by the brake units of the first type, distributing the remaining braking force amongst the brake elements of a second type.

Advantageously, each individual unit is independently operable and is provided with its own unit controller and each unit controller is adapted to carry out the method.

According to particular features of the method the step of determining the current operating conditions of the rail vehicle may include detecting failure of a brake element and flagging that brake element as non-operable, detecting the loading of the rail vehicle and/or detecting the presence of wheel slip.

Preferably, in the case that the brake elements of the first type are electrodynamic brakes the step of determining the current operating conditions of the rail vehicle includes detecting the condition of an electrical energy supply associated with each electrodynamic brake. In this case, on detecting an adverse condition of the electrical energy supply to a particular electrodynamic brake, that electrodynamic brake is flagged as non-operable only after a time delay.

The present invention also provides a program adapted to perform the method as described above, which may be implemented in a mixture of software and hardware and which may be provided by the unit controllers.

An embodiment of the present invention will now be described, by way of example only, having reference to the accompanying figure, in which:

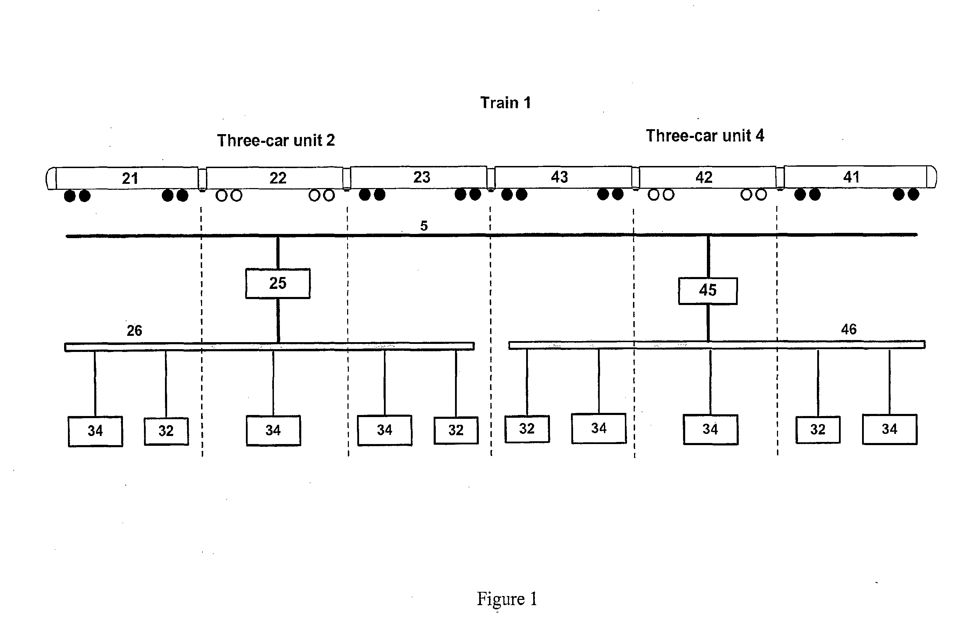

Figure 1 shows a train configuration indicating details of the brake control.

Referring to Figure 1 there is shown a train 1 formed by two three-car units 2, 4. Each unit comprises a pair of locomotives 21, 23, 41, 43 and a single carriage 22, 42. Other configurations comprising different numbers of units or different arrangements of vehicles within each unit are also possible. While in the present example each unit is substantially identical, it is also possible to combine different units.

By locomotive, is meant a vehicle being provided with its own propulsive power, usually in the form of an electric motor. In most suburban rail configurations, the locomotive is itself a passenger carriage and is referred to in this way merely to distinguish from other carriages in which no propulsive power is present. In this example, the locomotives 21, 23, 41 and 43 are each electrically driven by asynchronous motors and are arranged for electrodynamic braking (ED braking) by the regenerative action of these motors acting as generators. They are also provided with auxiliary braking capacity in the form of electropneumatically actuated disk brakes acting on the driven axles. It will be understood that other propulsive units may be employed in place of or in addition to the locomotives of this example.

The carriages 22 and 42 are effectively free-wheeling and are only provided with electropneumatic (EP brakes) brakes.

Each unit 2, 4 is provided with a unit controller 25, 45. The unit controllers 25, 45 are linked together within the train 1 by a system bus 5. Within each unit a local bus 26, 46 links the unit controller 25, 45 to a number of drive control units 32 which control both traction and braking of the driven axles and EP controllers 34 which control all the individual EP brakes within the respective units. Thus for example, locomotive 21 is provided with one drive control unit 32 and one EP controller 34, while carriage 22 is only provided with an EP controller 34.

In order to ensure that the system is independent of the number of units coupled together to form the train 1, each unit controller 25, 45 may be implemented to have the same functionality. In this way, the control and calculation of the braking distribution described below is conducted in parallel in each of the unit controllers making up the train. This may be achieved by implementing the controllers 25, 45 as similar software modules.

On start up of the electronic control system, each unit controller 25, 45 determines in an initialisation phase, the total number of units 2, 4 coupled together to form the train 1 and the total number of non-electrodynamically braked axles presented.

During normal braking the asynchronous motors are operated as generators and the current produced is an indicator of the actual braking force. During the braking procedure, for each unit controller 25, 45 the actual braking force of each of the active ED brakes in the locomotives 21, 23, 41 and 43 is periodically determined and summed together to give the total actual braking force.

The torque/speed characteristic of asynchronous motors is not constant and for this reason, the braking effect on the train 1 over the full range of speeds is also not constant. However, since the desired braking force is usually a constant value input by the driver or by an automatic drive control system, this torque/speed characteristic must be taken into account as a correction factor when calculating the required braking force.

The difference between the required braking force and the actual braking force may be referred to as the auxiliary braking requirement. This is divided between the total number of non-electrodynamically braked axles. In the present example, these are the axles of the carriages 22 and 42. It should be noted however that in the case of total failure of the ED brakes in one of the locomotives 21, 23, 41, 43, the axles associated with that locomotive become non-electrodynamically braked axles. The EP brake system for these axles are then also taken into account for the distribution of the auxiliary braking force.

Since each unit controller 25, 45 receives parallel information concerning the present configuration and state of all the brake systems within the train, they each come to the same result. The individual auxiliary brake force requirements can be distributed directly over the local bus 26, 46 to the EP controllers 34 of the non-electrodynamically braked axles within that unit.

Any delay in brake actuation due to the increased calculation requirements of providing parallel calculation within each unit is minimal, since the calculation time of the unit controllers 25, 45 is small compared with the overall braking period.

The advantages of this braking procedure can be summarised as:
▪ The pneumatically applied auxiliary braking force is provided equally by all the available, non-electrodynamically braked axles
▪ The cause and location of the fault with the main electrodynamic brake have little or no influence on the implementation of the auxiliary brake
▪ There is no reduction in the operating capacity of the train due to local thermal overload of the EP brakes within one unit or on one axle. Only on total failure of all ED brakes within the complete train, will the EP brakes be operated at or close to their thermal limits
▪ The frictional contact force of the rail/wheel system is optimally employed.

While the present invention has been described in relation to a brake system for a rail vehicle it is also envisaged that it may be applicable to other multi-axle vehicles where it is necessary to provide auxiliary braking in the case of failure of a main brake system.

The invention will now be further described with reference to an example of a blending concept for a 6-carriage train as illustrated in Figure 1.

### Example

### 1. Blending Concept for a 6-Carriage Train

The performance limits of the electrodynamic brake (ED brake) in the upper speed range and the maximum permissible surface temperature at the wheels, require a distribution of the braking force of the electropneumatic auxiliary brake (EP brake) over the 6 carriages.

On the basis of the characteristics of the ED brakes, the available power supply, the current train loading and the availability of the ED brakes, the blending concept illustrated below may be employed. For the determination of vehicle loading, the following definitions are employed:

| | |
|---|---|
| AW0 | Empty |
| AW1 | All seats occupied |
| AW2 | Normal load, seats and floor space occupied |
| AW3 | Maximum load, all available space occupied |

As a consequence of this concept: the braking system may function both in the case of operational ED brakes and also in the case of failure of one or more of these units; the available EP brakes are equally loaded; the computational power requirement of the electronic components in the EP controllers increases marginally; the computational power requirement of the electronic components in the unit controller increases marginally; and the load on the system bus and local buses remains minimal.

### 2. Operating Conditions without EP braking

**▪** Loading from AW0 to AW2
▪ Power supply line ≥ 1500 Volt

### Note:

Even though braking is primarily ED braking, on each brake command a restricted EP brake force is provided to each carriage (about 1kN/axle). This results in a shortening of the dead time for the EP brakes and also provides a polishing effect for the contact surfaces.

### 3. Operating Conditions with EP braking

Under the following operating conditions auxiliary EP braking must be provided (100% requirement) and the signal "service brake" is set.
▪ Loading > AW2
▪ Failure of one or more ED brakes
▪ Power supply line < 1500 Volt
▪ Operation of slip control in a drive control unit

### 3.1 EP Brake Control Algorithm

The four locomotives provide their actual ED brake signal to the unit controller of each vehicle unit. The unit controller sends these signals to the other vehicle unit via the system bus. The unit controllers calculate the sum of the actual ED brake signal for the complete 6 carriage train. Subsequently each unit controller calculates the brake force difference from the value of the required brake force. The brake force difference is divided between the total number of non-electrodynamically braked cars. To achieve this, each unit controller is informed about the number of active ED brakes.

The important cases are described as follow.

### 3.2 Brake force distribution for the EP brake

### 3.2.1 Loading > AW2, Power supply line ≥ 1500 Volt, all ED brakes active

▪ 4 ED brakes are active. The brake force difference is divided by two. Only the EP brakes in the carriages are activated.

### 3.2.2 Loading AW0 to AW3, Power supply line ≥ 1500 Volt, one ED brake failed

▪ 3 ED brakes are active. The brake force difference is divided by three. The EP brakes in the carriages are activated together with the EP brake in the failed locomotive.

### 3.2.3 Loading AW0 to AW3, Power supply line ≥ 1500 Volt, two ED brakes failed

▪ 2 ED brakes are active. The brake force difference is divided by four. The EP brakes in the carriages are activated together with the EP brakes in both the failed locomotives.

### 3.2.4 Loading > AW2, Power supply line < 1500 Volt, all ED brakes active

▪ In the case of low supply voltage and all 4 ED brakes are active. The brake force difference is divided by two. At first only the EP brakes in the carriages are activated. If the brake force difference is greater than the sum of maximum brake force of the EP brakes in the carriages then the remainder of the brake force difference is divided by four. Now the EP brakes together with the ED brakes are activated in all locomotives.

Note:
(1) Occurrence of this later case is relatively rare. In the case of such a condition, it has been noted that during the braking procedure, the supply voltage may pick up to the required 1500V value as a result of regenerative feed back to the supply network. For this reason, the unit controllers set the signal "line voltage less rated" only after a delay of e.g. 1 second. Once set, this signal is then "frozen" during the braking procedure even if the supply voltage drop later picks up. The "line voltage less rated" signal is only reset once the signal "service brake" is also reset.
(2) The permitted wheel/rail adhesion of 0.16 for the driven axles will not be exceeded on simultaneous braking by both ED and EP brakes.

### 3.2.5 Loading > AW2, Power supply line < 1500 Volt, one ED brake failed

▪ In the case of low supply voltage and a single ED brake failure, the brake force difference is divided by three. At first the EP brakes in the carriages together with the EP brake in the failed locomotive are activated. If the brake force difference is greater than the sum of maximum brake force of the EP brakes in the carriages and the failed locomotive, then the remainder of the brake force difference is divided by three. Now the EP brakes together with the ED brakes are activated in all active locomotives.

### Note:

(3) The permitted wheel/rail adhesion of 0.16 for the driven axles will not be exceeded on simultaneous braking by both ED and EP brakes.

### 3.2.6 Loading AW0 - AW3, Power supply line ≥1500 Volt, all ED brakes active, one EP controller failed

### Note:

(4) In this context, EP controller failed means that the EP controller registers a class 3 failure and the pressure switch in the respective vehicle shows no brake pressure.
(5) If the EP controller registers a class 3 failure and the pressure switch in the respective vehicle does indicate brake pressure this means that during braking, the EP brake is providing braking force but that on stopping the train, the brake can no longer be released.

### 3.2.6.1 EP controller failure in locomotive

▪ If the EP controller in one of the locomotives has failed and all 4 ED brakes are active, then,
   ∘ For AW0 - AW2 no EP brake force distribution according to point 2 above.
   ∘ For AW2 - AW3 EP brake force distribution according to point 3.2.1 above.

### Note:

(6) In the case of manual control, the driver must in this case activate the braking procedure earlier.
(7) In the case of auto-control, the driver should first switch to manual before activating the manual braking procedure.

### 3.2.6.2 EP controller failure in carriage

▪ If the EP controller in one of the carriages has failed and all 4 ED brakes are active, then the brake force difference is not divided. At first only the EP brake in the remaining carriage operates. If the brake force difference is greater than the maximum brake force of the EP brake in the remaining carriage then the remainder of the brake force difference is divided by four. Now the EP brakes together with the ED brakes are activated in all locomotives.

### 3.2.7 Loading AW0 - AW3, Power supply line ≥ 1500 Volt, EP controller failure in one carriage and one ED brake failed

▪ If the EP controller has failed in one of the carriages and only 3 ED brakes are active (1 ED brake failed), the brake force difference is divided by two. At first the EP brake in the non failed carriage together with the EP brake in the failed locomotive are activated. If the brake force difference is greater than the maximum brake force of the EP brakes in the remaining carriage and the failed locomotive then the remainder of the brake force difference is divided by three. Now the EP brakes together with the ED brakes are activated in all active (non failed) locomotives.

### Note:

(8) The permitted wheel/rail adhesion of 0.16 for the driven axles may be exceeded on simultaneous braking by both ED and EP brakes.

### 3.3 Anti Slip Control Concept

### 3.3.1 No blending of ED and EP braking in locomotives

▪ Normal slip of the ED brake (e.g. if during a monitoring period Tₛₗᵢₚ = 5s more than 50% of the required brake force is transmitted to the rail). The drive control unit independently controls the ED brake. The unit controller controls the anti slip procedure. The EP controller in the affected locomotive is informed of slip occurrences during ED control via the signal "NormSIB" or "Norm SIC. Brake force distribution takes place according to point 3.2.1 above.
▪ Severe slip of the ED brake (e.g. if during a monitoring period Tₛₗᵢₚ = 5s less than 50% of the required brake force is transmitted to the rail). The unit controller switches off the ED brake in the affected locomotive. The unit controller provides EP brake force in the affected locomotive and both carriages with even brake force distribution according to point 3.2.2 above. The EP controllers in the affected locomotive and both carriages are informed of the switching off of the ED brake and the take-over by the EP brake via the signal "ED_Brake_active-XX".

### 3.3.2 Blending of ED and EP brake force in the locomotives, Power supply line < 1500 Volt. In this rare case of low supply line voltage (< 1500 Volt) ED and EP brakes operate together in all locomotives

▪ Normal slip of the ED brake - brake force distribution according to point 3.2.4 above
▪ Severe slip of the ED brake - brake force distribution according to point 3.2.5 above

### 3.3.2 Blending of ED and EP brake force in the locomotives, Failure of EP controller in one carriage. In the rare case of failure of EP controller in one carriage ED and EP brakes operate together in all locomotives

▪ Normal slip of the ED brake - brake force distribution according to point 3.2.6 above
▪ Severe slip of the ED brake - brake force distribution according to point 3.2.7 above

In addition to the above indicated controls and systems, other events, procedures and sensors may be included in the system to achieve optimisation of the brake control. These may include:
▪ overspeed switches, automatically actuated e.g. by the EP controller on passing a given maximum speed;
▪ wheel diameter sensor and indication provided e.g. over the local bus to the EP controller
▪ low-speed blending for controlled switch off of the ED brakes below certain limits.

## Claims

1. A multi-axle rail vehicle (1) comprising a plurality of individually operable units (2, 4) each unit comprising: brake elements of a first and/or second type for applying a required braking force to the vehicle in response to a brake command; and a unit controller (25, 45), which monitors operation of the brake elements of the whole vehicle and on detection of a reduction of effectiveness of a brake element, can distribute the associated loss of braking force between remaining effective brake elements.

2. The rail vehicle according to claim 1, wherein each individually operable unit (2, 4) comprises a propulsive device.

3. The rail vehicle (1) according to any preceding claim, wherein each unit controller (25, 45) receives configuration information concerning the number of units comprised in the rail vehicle (1) and wherein the configuration information includes information concerning the number and type of brake elements present in the rail vehicle.

4. The rail vehicle (1) according to any preceding claim, wherein the brake elements are of a first brake type and a second brake type and wherein the controller (25, 45), on detection of a reduction of effectiveness of a brake element of a first brake type, distributes the associated loss of braking force between the brake elements of the second brake type.

5. The rail vehicle (1) according to claim 4, wherein the braking force is initially applied only by the brake elements of the first brake type in response to the brake command.

6. The rail vehicle (1) according to either claim 4 or claim 5, wherein the controller (25, 45) distributes the associated loss of braking force between all the brake elements of the second brake type.

7. The rail vehicle (1) according to any of claims 4 to 6, wherein at least one axle is provided with brake elements of both the first brake type and the second brake type and at least one axle is provided with only brake elements of the second brake type.

8. The rail vehicle (1) according to claim 7, wherein the braking force is initially applied only by the brake elements of the first brake type in response to the brake command and wherein the controller (25, 45) distributes the associated loss of braking force between all those axles having effective brake elements only of the second brake type.

9. The rail vehicle (1) according to any of claims 4 to 8, wherein the first brake type is an electrodynamic brake and the second brake type is a pneumatic brake.

10. A method of achieving a desired braking force in a rail vehicle comprising a plurality of independently operable individual units, each unit including brake elements of a first and/or second type and a unit controller, wherein each unit controller carries out the method comprising:
interrogating the individual units to determine the number of individual units comprised in the rail vehicle and the number and type of brake elements;
determining the current operating conditions of the rail vehicle; and
evaluating whether the desired braking force can be achieved using only the brake elements of a first type; and
wherein in the event that not all the desired braking force can be provided by the brake units of the first type the remaining braking force is distributed amongst the brake elements of a second type.

11. The method according to claim 10, wherein each unit controller distributes its remaining braking force requirement amongst the brake elements of a second type within its own individual unit.

12. The method according to claim 10 or claim 11, wherein the step of determining the current operating conditions of the rail vehicle includes detecting failure of a brake element and flagging that brake element as non-operable.

13. The method according to any of claims 10 to 12, wherein the step of determining the current operating conditions of the rail vehicle includes detecting the loading of the rail vehicle.

14. The method according to any of claims 10 to 13, wherein the brake elements of a first type are electrodynamic brakes and the step of determining the current operating conditions of the rail vehicle includes detecting the condition of an electrical energy supply associated with each electrodynamic brake.

15. The method according to claim 14, wherein on detecting an adverse condition of the electrical energy supply to an electrodynamic brake that electrodynamic brake is flagged as non-operable only after a time delay.

16. The method according to any of claims 10 to 15, wherein the step of determining the current operating conditions of the rail vehicle includes detecting the presence of wheel slip.

17. A program adapted to perform the method according to any one of claims 10 to 16.

## Patentansprüche

1. Mehrachsiges Schienenfahrzeug (1), umfassend eine Mehrzahl unabhängig voneinander bedienbarer Einheiten (24), wobei jede Einheit umfasst: Bremselemente einer ersten und/oder zweiten Art zur Beaufschlagung des Fahrzeugs mit einer erforderlichen Bremskraft als Reaktion auf einen Bremsbefehl; sowie eine Einheitssteuerung (25, 45), die den Betrieb der Bremselemente des gesamten Fahrzeugs überwacht und bei erkanntem Wirksamkeitsverlust eines Bremselements den entsprechenden Bremskraftverlust auf die übrigen wirksamen Bremselemente verteilen kann.

2. Schienenfahrzeug (1) nach Anspruch 1, wobei jede unabhängig bedienbare Einheit (2, 4) eine Antriebseinrichtung umfasst.

3. Schienenfahrzeug (1) nach einem der vorstehenden Ansprüche, wobei jede Einheitssteuerung (25, 45) Konfigurationsdaten über die Anzahl der im Schienenfahrzeug (1) enthaltenen Einheiten empfängt und wobei die Konfigurationsdaten Daten über Anzahl und Art der im Schienenfahrzeug vorhandenen Bremselemente enthalten.

4. Schienenfahrzeug (1) nach einem der vorstehenden Ansprüche, wobei die Bremselemente einer ersten Bremsart und einer zweiten Bremsart sind und wobei die Steuerung (25, 45) bei erkanntem Wirksamkeitsverlust eines Bremselements einer ersten Art den entsprechenden Bremskraftverlust unter die Bremselemente der zweiten Art verteilt.

5. Schienenfahrzeug (1) nach Anspruch 4, wobei auf den Bremsbefehl hin die Bremskraft zunächst nur durch die Bremselemente der ersten Art angewendet wird.

6. Schienenfahrzeug (1) nach Anspruch 4 oder 5, wobei die Steuerung (25, 45) den entsprechenden Bremskraftverlust unter alle Bremselemente der zweiten Art verteilt.

7. Schienenfahrzeug (1) nach einem der Ansprüche 4 bis 6, wobei mindestens eine Achse mit Bremselementen sowohl der ersten als auch der zweiten Art versehen ist und mindestens eine Achse nur mit Bremselementen der zweiten Art versehen ist.

8. Schienenfahrzeug (1) nach Anspruch 7, wobei auf den Bremsbefehl hin die Bremskraft zunächst nur durch die Bremselemente der ersten Art angewendet wird, und wobei die Steuerung (25, 45) den entsprechenden Bremskraftverlust unter alle Achsen verteilt, die wirksame Bremselemtente ausschließlich der zweiten Art aufweisen.

9. Schienenfahrzeug (1) nach einem der Ansprüche 4 bis 8, wobei die erste Bremsart eine elektrodynamische Bremse und die zweite Bremsart eine pneumatische Bremse ist.

10. Verfahren zur Erreichung einer gewünschten Bremskraft bei einem Schienenfahrzeug, das eine Mehrzahl unabhängig voneinander bedienbarer Einheiten umfasst, wobei jede Einheit Bremselemente einer ersten und/oder zweiten Art sowie eine Einheitssteuerung umfasst und wobei jede Einheitssteuerung das Verfahren ausführt, das umfasst:
Abfragen der einzelnen Einheiten zur Ermittlung der Anzahl der im Schienenfahrzeug enthaltenen Einheiten sowie Anzahl und Art der Bremselemente;
Ermitteln der aktuellen Betriebsbedingungen des Schienenfahrzeugs; und
Beurteilen, ob die gewünschte Bremskraft unter Einsatz nur der Bremselemente der ersten Art erreichbar ist; und
wobei die übrige Bremskraft unter die Bremselemente einer zweiten Art verteilt wird, wenn nicht die ganze gewünschte Bremskraft von den Bremselementen der ersten Art aufzubringen ist.

11. Verfahren nach Anspruch 10, wobei jede Einheitssteuerung ihren übrigen Bremskraftbedarf unter die Bremselemente einer zweiten Art innerhalb der eigenen Einheit verteilt.

12. Verfahren nach Anspruch 10 oder 11, wobei der Schritt des Ermittelns der aktuellen Betriebsbedingungen des Schienenfahrzeugs die Erkennung des Versagens eines Bremselements und das Markieren des besagten Bremselements als nicht funktionsfähig umfasst.

13. Verfahren nach einem der Ansprüche 10 bis 12, wobei der Schritt des Ermitteins der aktuellen Betriebsbedingungen des Schienenfahrzeugs das Erkennen des Beladungszustandes des Schienenfahrzeugs umfasst.

14. Verfahren nach einem der Ansprüche 10 bis 13, wobei die Bremselemente einer ersten Art elektrodynamische Bremsen sind und der Schritt des Ermitteins der aktuellen Betriebsbedingungen des Schienenfahrzeugs das Erkennen des jeweiligen Zustandes einer jeder elektrodynamischen Bremse zugeordneten Energiezufuhr umfasst.

15. Verfahren nach Anspruch 14, wobei eine jeweilige elektrodynamische Bremse erst zeitverzögert als nicht funktionsfähig markiert wird, wenn ein unerwünschter Zustand bei der elektrischen Energiezufuhr der elektrodynamischen Bremse festgestellt wird.

16. Verfahren nach einem der Ansprüche 10 bis 15, wobei der Schritt des Ermitteins der aktuellen Betriebsbedingungen des Schienenfahrzeugs das Erkennen von Radschlupf umfasst.

17. Programm, das zur Ausführung des Verfahrens nach einem der Ansprüche 10 bis 16 geeignet ist.

## Revendications

1. Véhicule ferroviaire à plusieurs essieux (1) comprenant une pluralité d'unités individuellement actionnables (2, 4), chaque unité comprenant : des éléments de frein d'un premier et/ou second type pour appliquer une force de freinage requise sur le véhicule en réponse à une commande de frein ; et un contrôleur d'unité (25, 45) qui surveille le fonctionnement des éléments de frein de la totalité du véhicule et suite à la détection d'une réduction d'efficacité d'un élément de frein, peut répartir la perte de force de freinage associée entre les éléments de frein effectifs restants.

2. Véhicule ferroviaire selon la revendication 1, dans lequel chaque unité individuellement actionnable (2, 4) comprend un dispositif de propulsion.

3. Véhicule ferroviaire (1) selon l'une quelconque des revendications précédentes, dans lequel chaque contrôleur d'unité (25, 45) reçoit une information de configuration concernant le nombre d'unités comprises dans le véhicule ferroviaire (1), et dans lequel l'information de configuration comprend l'information concernant le nombre et le type d'éléments de frein présents dans le véhicule ferroviaire.

4. Véhicule ferroviaire (1) selon l'une quelconque des revendications précédentes, dans lequel les éléments de frein sont d'un premier type de frein et d'un second type de frein et dans lequel le contrôleur (25, 45), suite à la détection d'une réduction d'efficacité d'un élément de frein d'un premier type de frein, répartit la perte de force de freinage associée entre les éléments de frein du second type de frein.

5. Véhicule ferroviaire (1) selon la revendication 4, dans lequel la force de freinage est initialement appliquée uniquement par les éléments de frein du premier type de frein en réponse à la commande de frein.

6. Véhicule ferroviaire (1) selon la revendication 4 ou la revendication 5, dans lequel le contrôleur (25, 45) répartit la perte de force de freinage associée entre tous les éléments de frein du second type de frein.

7. Véhicule ferroviaire (1) selon l'une quelconque des revendications 4 à 6, dans lequel au moins un essieu est prévu avec des éléments de frein à la fois du premier type de frein et du second type de frein et au moins un essieu est prévu avec uniquement des éléments de frein du second type de frein.

8. Véhicule ferroviaire (1) selon la revendication 7, dans lequel la force de freinage est initialement appliquée uniquement par les éléments de frein du premier type de frein en réponse à la commande de frein et dans lequel le contrôleur (25, 45) répartit la perte de force de freinage associée entre tous ces essieux ayant des éléments de frein effectifs uniquement du second type de frein.

9. Véhicule ferroviaire (1) selon l'une quelconque des revendications 4 à 8, dans lequel le premier type de frein est un frein électrodynamique et le second type de frein est un frein pneumatique.

10. Procédé pour obtenir une force de freinage souhaitée dans un véhicule ferroviaire comprenant une pluralité d'unités individuelles indépendamment actionnables, chaque unité comprenant des éléments de frein d'un premier et/ou d'un second type et un contrôleur d'unité, dans lequel chaque contrôleur d'unité réalise le procédé comprenant les étapes consistant à :
interroger les unités individuelles pour déterminer le nombre d'unités individuelles comprises dans le véhicule ferroviaire et le nombre et le type d'éléments de frein ;
déterminer les conditions de fonctionnement courantes du véhicule ferroviaire ; et
évaluer si la force de freinage souhaitée peut être obtenue en utilisant uniquement les éléments de frein d'un premier type ; et
dans lequel, dans le cas dans lequel la totalité de la force de freinage souhaitée ne peut être fournie par les unités de frein du premier type, la force de freinage résiduelle est répartie parmi les éléments de frein d'un second type.

11. Procédé selon la revendication 10, dans lequel chaque contrôleur d'unité répartit son besoin de force de freinage résiduelle parmi les éléments de frein d'un second type dans sa propre unité individuelle.

12. Procédé selon la revendication 10 ou la revendication 11, dans lequel l'étape consistant à déterminer les conditions de fonctionnement courantes du véhicule ferroviaire comprend l'étape consistant à détecter la défaillance d'un élément de frein et signaler cet élément de frein en tant que non opérationnel.

13. Procédé selon l'une quelconque des revendications 10 à 12, dans lequel, l'étape consistant à déterminer les conditions de fonctionnement courantes du véhicule ferroviaire comprend l'étape consistant à détecter la charge du véhicule ferroviaire.

14. Procédé selon l'une quelconque des revendications 10 à 13, dans lequel les éléments de frein d'un premier type sont des freins électrodynamiques et l'étape consistant à déterminer les conditions de fonctionnement courantes du véhicule ferroviaire comprend l'étape consistant à détecter la condition d'une alimentation en énergie électrique associée avec chaque frein électrodynamique.

15. Procédé selon la revendication 14, dans lequel, suite à la détection d'une condition défavorable de l'alimentation en énergie électrique pour un frein électrodynamique, ce frein électrodynamique est signalé en tant non opérationnel uniquement après un certain délai.

16. Procédé selon l'une quelconque des revendications 10 à 15, dans lequel l'étape consistant à déterminer les conditions de fonctionnement courantes du véhicule ferroviaire comprend l'étape consistant à détecter la présence de patinage de roue.

17. Programme adapté pour réaliser le procédé selon l'une quelconque des revendications 10 à 16.
